# EUROPÄISCHE PATENTSCHRIFT

(11) **EP 2 692 903 B1**
(45) Veröffentlichungstag und Bekanntmachung des Hinweises auf die Patenterteilung: **21.02.2018**
(21) Anmeldenummer: 12179038.0
(22) Anmeldetag: 02.08.2012
(51) Int. Cl.: C25B 1/04, C25B 11/03, C25B 11/04, C25B 1/02, C25B 9/00

(54) **Wasserstoffentwicklungszelle mit Kathodentasche**
Cellule de développement d'hydrogène avec poche pour cathode
Hydrogen development cell with cathode pocket

(43) Veröffentlichungstag der Anmeldung: 05.02.2014
(73) Patentinhaber: VARTA Microbattery GmbH, 73479 Ellwangen (DE); Fraunhofer-Gesellschaft zur Förderung der angewandten Forschung e.V., 80686 München (DE)
(72) Erfinder: Krebs Dr., Martin, 73494 Rosenberg (DE); Hahn Dr., Robert, 13156 Berlin (DE); Schmalz Dr., Michael, 73479 Ellwangen (DE)
(74) Vertreter: Patentanwaltskanzlei Cartagena

(56) Entgegenhaltungen:
- EP-A2- 0 144 002
- CH-A- 175 666
- DE-A1- 4 116 359
- DE-C- 412 217
- US-A- 4 409 084
- US-A1- 2008 169 188

## Beschreibung

Die vorliegende Erfindung betrifft eine Wasserstoffentwicklungszelle.

Gattungsgemäße Wasserstoffentwicklungszellen besitzen innerhalb eines Gehäuses einen Anodenraum und einen Kathodenraum, die über einen Separator voneinander getrennt sind.

Entsprechende Zellen mit einer Metallanode in Form einer Zinkpaste, Wasserstoffelektrode und einem wässrigen Elektrolyten sind beispielsweise aus der DE 35 32 335 A1 sowie aus der EP 1 396 899 A2 oder der DE 4116359 A1 bekannt.

In Wasserstoffentwicklungszellen ist das Reaktionsgas Wasserstoff chemisch in Form von Wasser als Hauptbestandteil des Elektrolyten in der Regel drucklos gespeichert.

Die Erzeugung von Wasserstoff erfolgt bei Zellen mit einer Metallanode aus Zink gemäß den folgenden Reaktionsgleichungen:

| | |
|---|---|
| Anodenreaktion: | Zn + 2OH⁻ ⇒ ZnO + H₂O +2e⁻ |
| Kathodenreaktion: | 2 H₂O + 2e⁻ ⇒ 2 OH⁻ + H₂ |
| Gesamtreaktion | Zn + H₂O ⇒ ZnO + H₂ |

Im Verlauf obiger Reaktion wird somit das in der Zelle befindliche Zink zu Zinkoxid oxidiert, während an der Kathode Wasserstoffgas entsteht.

Dies steht im Gegensatz zu den Vorgängen in Elektrolysezellen, bei denen Wasser mittels Anlegen einer elektrischen Spannung in seine elementaren Bestandteile zersetzt wird, die zum Anlegen der Spannung verwendeten Elektroden jedoch selbst keiner Oxidation unterliegen. Beispiele für Elektrolysezellen finden sich in der US 2008/0169188 A1, in der CH 175 666 A, in der DE 412 217 C und in der US 4409084 A. Aus der EP 0 144 002 A2 sind poröse Gaselektroden für Elektrolysevorrichtungen bekannt.

Durch die Wasserstoffentwicklung entsteht in der Regel ein leichter Überdruck in den Zellen. Steigt der Überdruck weiter an, besteht die Gefahr, dass sich der Separator aufwölbt und Druck auf den Anodenraum ausübt, wodurch Elektrolyt aus der Zelle austreten kann. Mit anderen Worten kann Wasserstoffüberdruck die Ursache für das Auftreten von Undichtigkeiten sein.

Da die Gehäuse von Wasserstoffentwicklungszellen zudem in der Regel zweiteilig ausgebildet sind und einen Gehäusebecher und -deckel umfassen, müssen aufwendige Maßnahmen ergriffen werden, um eine hermetische Abdichtung der Zellen zu erzielen. Dies geschieht üblicherweise durch den Einsatz von Dichtringen und mittels Bördelung oder Verschraubung von Gehäusebecher und -deckel.

Gattungsgemäße Wasserstoffentwicklungszellen weisen somit eine Reihe von potentiellen Undichtigkeitsstellen bzw. konstruktive Ausgestaltungen auf, die Undichtigkeiten auf Kosten der Lebensdauer der Zellen zur Folge haben können.

Der vorliegenden Erfindung liegt daher die Aufgabe zugrunde, eine Wasserstoffentwicklungszelle bereitzustellen, welche aus dem Stand der Technik im Zusammenhang mit Wasserstoffentwicklungszellen beschriebene Unzulänglichkeiten umgeht, insbesondere ein gegenüber gattungsgemäßen Wasserstoffentwicklungszellen deutlich reduziertes Risiko für das Auftreten von Undichtigkeiten aufweist.

Diese Aufgabe wird gelöst durch eine Wasserstoffentwicklungszelle mit den Merkmalen des unabhängigen Anspruchs 1. Bevorzugte Ausführungsformen der erfindungsgemäßen Zelle gemäß Anspruch 1 sind Gegenstand der abhängigen Ansprüche 2 bis 12.

Die erfindungsgemäße Wasserstoffentwicklungszelle umfasst eine elektrochemisch oxidierbare Anode, eine Wasserstoffkathode, einen Elektrolyten sowie ein Gehäuse. Das Gehäuse enthält die vorstehend genannten Aktivkomponenten (Anode, Kathode und Elektrolyt) sowie gegebenenfalls weitere Komponenten.

Bei Durchfluss eines elektrischen Stroms setzt die Wasserstoffentwicklungszelle eine zur Menge des durchfließenden Stroms proportionale Menge Wasserstoff frei. Die entwickelte Wasserstoffmenge ist mit der geflossenen elektrischen Ladung über das Faradaysche Gesetz verknüpft. Somit kann die entstehende Wasserstoffmenge über den Strom exakt gesteuert werden.

Bei dem Elektrolyt handelt es sich vorzugsweise um einen wässrigen Elektrolyt, insbesondere alkalischen Elektrolyt wie beispielsweise Natron- oder Kalilauge.

Die Anode ist eine metallhaltige Anode, wobei das Metall aus der Gruppe bestehend aus Zink, Magnesium, Aluminium und Legierungen davon ausgewählt ist. Das Metall kann in Form einer Paste, eines Pulvers oder Gels vorliegen.

Besonders bevorzugt ist die Anode eine Zinkanode oder zinkhaltige Anode, wobei das Zink insbesondere als Paste, Pulver oder Gel vorliegen kann. In anderen Worten enthält die Anode bevorzugt eine Zinkpaste, ein Zinkpulver oder ein Zinkgel oder besteht bevorzugt aus einer solchen Paste, einem solchen Pulver bzw. einem solchen Gel.

Eine bevorzugte Legierung für die Anode stellt eine Magnesium-Aluminium-Legierung, insbesondere in Form eines Bleches, dar.

Alternativ oder in Ergänzung zu den vorangegangenen Ausführungsformen kann die Anode amalgamiert oder nicht amalgamiert sein.

In der Regel ist der Anode ein Anodenableiter zugeordnet. Der Anodenableiter kann als Folie, Blech, Streckmetall oder dergleichen ausgebildet sein und beispielsweise aus Zink, Messing, Kupfer oder anderen für Knopfzellen, insbesondere quecksilberfreie Knopfzellen, typischen Materialien bestehen.

Die Wasserstoffkathode enthält vorzugsweise ein Edelmetall wie beispielsweise Palladium und/oder Platin. Alternativ oder in Kombination hierzu kann die Wasserstoffkathode Nickel, insbesondere Raney-Nickel, enthalten.

Auch der Wasserstoffkathode ist in der Regel ein Elektrodenableiter, nämlich ein Kathodenableiter, zugeordnet.

Die Anode und/oder Kathode können in zweckmäßigen Ausführungsformen (jeweils) in Form eines Bleches ausgebildet sein. In diesem Fall kann auf Ableiter als eigenständige Komponenten verzichtet werden.

Besonders bevorzugt handelt es sich bei der Wasserstoffkathode um eine Gasdiffusionselektrode, insbesondere eine kunststoffgebundene Gasdiffusionselektrode. Im Falle von kunststoffgebundenen Gasdiffu-sionselektroden bildet ein Kunststoffbinder, bevorzugt Polytetrafluorethylen (PTFE), eine poröse Matrix aus, in die Partikel aus einem elektrokatalytisch aktiven Material eingelagert sind. Bei dem elektrokatalytisch aktiven Material kann es sich beispielsweise um ein Metall, wie es oben bereits im Zusammenhang mit der Wasserstoffkathode erwähnt worden ist, oder um Kohlepulver handeln. In jedem Fall muss das elektrokatalytisch aktive Material die Reduktion von Wasser zu Wasserstoff katalysieren können. Die Herstellung solcher Elektroden erfolgt in aller Regel dadurch, dass eine Trockenmischung aus dem Binder und dem Katalysator zu einer Folie ausgewalzt wird. Diese kann wiederum in ein Metallnetz, beispielsweise aus Silber, Nickel oder versilbertem Nickel, eingewalzt werden. Das Metallnetz bildet eine Ableiterstruktur innerhalb der Kathode und dient als Stromableiter. Weiterhin ist es bevorzugt, wenn die Gasdiffusionselektrode auf der Metallnetz abgewandten Seite mit einer mikroporösen und hydrophoben Schicht, vorzugsweise in Form einer Polytetrafluorethylen-Folie (PTFE-Folie), beschichtet ist.

Das Gehäuse umfasst typischerweise zwei Gehäuseteile, nämlich einen Gehäusebecher und einen Gehäusedeckel. In der Regel besitzt das Gehäuse einen ebenen Bodenbereich und der Deckel einen zum Bodenbereich parallelen ebenen Deckelbereich. Auf das Gehäuse wird im Folgenden jedoch noch näher eingegangen.

Die erfindungsgemäße Wasserstoffentwicklungszelle zeichnet sich nun besonders dadurch aus, dass die Wasserstoffkathode am Aufbau wenigstens einer einen Hohlraum definierenden oder infolge von Wasserstoffüberdruck in der Zelle einen Hohlraum definierenden Tasche beteiligt ist oder eine solche Tasche bildet (Kathodentasche).

Somit kann die Tasche mit besonderem Vorteil als Reservoir von in der Zelle entstehendem Wasserstoff wirken und dadurch einen etwaigen, die Dichtigkeit der Zelle gefährdenden Überdruck abfedern.

Obendrein eröffnet die Ausbildung wenigstens einer Kathodentasche die vorteilhafte Möglichkeit, die Kathodentasche und weitere Aktivkomponenten der Zelle orthogonal oder im Wesentlichen orthogonal zu einem Gehäusebodenbereich der Zelle auszurichten, wodurch das Risiko von Undichtigkeiten zusätzlich minimiert werden kann.

Unter dem Ausdruck "Tasche" soll im Sinne der vorliegenden Erfindung ein in der Regel einseitig offener, einen Hohlraum definierender Hohlkörper verstanden werden, dessen Hohlraum durch eine umlaufende Taschenwand und einen Taschenboden umgrenzt wird und der eine dem Taschenboden gegenüberliegende Taschenöffnung aufweist, entlang derer während des Zellenbetriebs entstandener Wasserstoff aus der Tasche abströmen kann.

Der Ausdruck "wenigstens eine Tasche" erfasst eine Tasche oder eine Mehrzahl von Taschen, d.h. zwei oder mehr, beispielsweise drei, Taschen.

Die Wasserstoffkathode ist gemäß der Erfindung in Form wenigstens eines Hohlkörpers, bevorzugt wenigstens eines Hohlzylinders, ausgebildet. Der Begriff "Hohlzylinder" bzw. "hohlzylindrisch" soll im Sinne der Erfindung breit verstanden werden und bezeichnet einen Hohlkörper, der durch zwei parallele ebene Flächen, nämlich einer Grund- und Deckfläche, sowie einer Mantel- bzw. Zylinderfläche, die von parallelen Geraden gebildet wird, definiert wird. Somit werden von dem Begriff "Hohlzylinder" bzw. "hohlzylindrisch" insbesondere Hohlprismen, Hohlzylinder mit elliptischer Grund- und Deckfläche, Hohlzylinder mit kreisförmiger Grund- und Deckfläche (Hohlkreiszylinder) und dergleichen erfasst. Im Übrigen definiert der Ausdruck "wenigstens ein Hohlkörper" einen Hohlkörper oder eine Mehrzahl, d.h. zwei oder mehr, beispielsweise drei, Hohlkörper.

Die Innenseite des wenigstens einen Hohlkörpers bzw. Hohlzylinders ist bevorzugt von einer porösen, insbesondere mikroporösen, und hydrophoben Schicht, vorzugsweise in Form einer Folie, ausgekleidet. Die Wahl der Schicht bzw. Folie ist nicht kritisch, solange sie aufgrund ihrer porösen Ausgestaltung den Durchtritt von Wasserstoff erlaubt, indes einen Durchtritt eines Elektrolyten wegen einer hohen Kapillardepression in den Poren verhindert. Eine solche Schicht bzw. Folie kann beispielsweise auf die Wasserstoffkathode auflaminiert sein. Bevorzugt ist die Innenseite des wenigstens einen Hohlkörpers bzw. Hohlzylinders mit einer Polytetrafluorethylen-Folie beschichtet. Dadurch kann der während des Zellenbetriebs entstehende Wasserstoff in die wenigstens eine Tasche gelangen und aus dieser (bedarfsabhängig) abgeführt werden.

In einer weitergehenden Ausführungsform liegt die Wasserstoffkathode in Form wenigstens eines einen Hohlkörper, bevorzugt Hohlzylinder, bildenden Kathodenverbunds vor.

Der Ausdruck "wenigstens ein Kathodenverbund" meint im Sinne der Erfindung einen Kathodenverbund oder eine Mehrzahl, d.h. zwei oder mehr, beispielsweise drei, Kathodenverbünde.

Der wenigstens eine Kathodenverbund ist vorzugsweise aus wenigstens zwei Kathodenkörpern gebildet.

Der Ausdruck "wenigstens zwei Kathodenkörper" umfasst erfindungsgemäß zwei oder mehr, beispielsweise drei, Kathodenkörper.

Besonders bevorzugt handelt es sich bei den wenigstens zwei Kathodenkörpern um zwei Kathodenhalbteile.

Zur Ausbildung des wenigstens einen Kathodenverbunds sind die wenigstens zwei Kathodenkörper in vorteilhaften Ausführungsformen randseitig, insbesondere längsrandseitig, und bevorzugt stoffschlüssig miteinander verbunden, insbesondere verklebt.

Beispielsweise können die wenigstens zwei Kathodenkörper mittels eines Dichtungs- oder Klebemittels miteinander verbunden sein. Geeignete Dichtungs- oder Klebemittel können dabei aus der Gruppe bestehend aus Dextrin, Polyvinylalkohol, Celluloseether und Mischungen davon ausgewählt sein.

Die wenigstens zwei Kathodenkörper sind in zweckmäßigen Ausführungsformen jeweils schicht- und/oder streifenförmig ausgebildet, insbesondere mit einer Schicht- bzw. Streifendicke im µm-Bereich.

Vorzugsweise sind die wenigstens zwei Kathodenkörper jeweils in Form einer Folie ausgebildet.

In weiteren Ausführungsformen sind die wenigstens zwei Kathodenkörper jeweils auf einer Seite mit einer porösen, insbesondere mikroporösen, und hydrophoben Schicht, vorzugsweise in Form einer Folie, beschichtet. Besonders bevorzugt sind die wenigstens zwei Kathodenkörper jeweils einseitig mit einer Polytetrafluorethylen-Folie (PTFE-Folie) bedeckt bzw. beschichtet. Bezüglich weiterer Einzelheiten zu der Schicht bzw. Folie wird auf die vorangegangene Beschreibung Bezug genommen.

Die Wasserstoffkathode, insbesondere in Form des wenigstens einen Kathodenverbunds wie beispielsweise in den vorangegangen Ausführungsformen erläutert, bildet vorzugsweise eine den Taschenhohlraum unmittelbar umschließende Taschenwand. Im Falle einer zylindrisch geformten Tasche bildet die Wasserstoffkathode, insbesondere der wenigstens eine Kathodenverbund, somit bevorzugt den Mantel der Tasche. Mit anderen Worten bildet ein von der Wasserstoffkathode, insbesondere dem wenigstens einen Kathodenverbund, definierter Hohlraum den Hohlraum der wenigstens einen Tasche.

Insbesondere sind die wenigstens zwei Kathodenkörper derart miteinander verbunden, dass die oben beschriebenen porösen und hydrophoben Schichten bzw. Folien einem durch die Wasserstoffkathode, insbesondere den wenigstens einen Kathodenverbund, definierten Hohlraum unmittelbar zugewandt sind.

Die Wasserstoffkathode, insbesondere der wenigstens eine Kathodenverbund, bzw. eine durch diese/diesen definierte Längssachse, insbesondere Längssymmetrieachse, ist vorzugsweise orthogonal oder im Wesentlichen orthogonal zu einem vorzugsweise ebenen Bodenbereich des Gehäuses ausgerichtet.

Die Wasserstoffkathode, insbesondere der wenigstens eine Kathodenverbund, ist weiter bevorzugt koaxial innerhalb des Gehäuses der Wasserstoffentwicklungszelle angeordnet.

In einer weiteren Ausführungsform ist die Wasserstoffkathode, insbesondere der wenigstens eine Kathodenverbund, innerhalb des Gehäuses mittig bzw. in etwa mittig angeordnet.

Besonders vorteilhaft ist es, wenn es sich bei den wenigstens zwei Kathodenkörpern jeweils um übliche Elektroden bzw. Wasserstoffkathoden handelt. Erfindungsgemäß ist es bevorzugt, wenn es sich bei den wenigsten zwei Kathodenkörpern jeweils um Gasdiffusionselektroden, insbesondere polymergebundene Gasdiffusionselektroden, handelt. Bezüglich weiterer Merkmale und Vorteile der Ausbildung der wenigstens zwei Kathodenkörper als Elektroden, insbesondere Gasdiffusionselektroden, wird vollständig auf die im Zusammenhang mit der Wasserstoffkathode der erfindungsgemäßen Zelle allgemein gemachten Ausführungen Bezug genommen.

Die Verbindung, insbesondere Verklebung, von Elektrodenkörpern, insbesondere von solchen mit PTFE-Folien, stellt generell eine etablierte Technologie dar, so dass die vorangegangenen Ausführungsformen das Risiko von Undichtigkeiten nicht oder wenigstens nicht nennenswert erhöhen.

Die Wasserstoffkathode, insbesondere der wenigstens eine Kathodenverbund, ist in einer weiteren Ausführungsform auf ihrer/seiner Außenseite, insbesondere Mantelaußenseite, über einen Separator von der Anode bzw. Anodenmasse getrennt. Unter dem Begriff "Außenseite" soll im Falle einer einen Hohlkörper bildenden Wasserstoffkathode bzw. eines einen Hohlkörper bildenden Kathodenverbunds die dem Hohlraum abgewandte Seite der Kathode bzw. des Kathodenverbunds verstanden werden. Bei dem Separator kann es sich um einen solchen handeln, wie er üblicherweise bei Knopf- und Wasserstoffentwicklungszellen zum Einsatz kommt. Der Separator kann dabei als Folie, insbesondere Polyolefinfolie, ausgebildet sein.

Die Wasserstoffkathode, insbesondere der wenigstens eine Kathodenverbund, und insbesondere die Anode sind in einer weiteren Ausführungsform in einem Gehäusebecher der Wasserstoffentwicklungszelle angeordnet.

Wie bereits erwähnt, kann es erfindungsgemäß durchaus vorgesehen sein, dass die wenigstens eine Tasche vollständig von der Wasserstoffkathode, insbesondere dem wenigstens einen Kathodenverbund, gebildet ist. In diesem Fall werden sowohl die Taschenwand als auch der Taschenboden von der Wasserstoffkathode, insbesondere dem wenigstens einen Kathodenverbund, gebildet.

In alternativen Ausführungsformen ist der Taschenboden jedoch von einem Separator-, Isolier- oder Dichtmaterial gebildet. Beispielsweise kann sich ein zwischen der Wasserstoffkathode, insbesondere dem wenigstens einen Kathodenverbund, und der Anode angeordneter Separator entlang der unteren Stirnseite der Wasserstoffkathode, insbesondere des wenigstens einen Kathodenverbunds, unter Ausbildung eines Taschenbodens erstrecken.

In einer weiteren Ausführungsform besitzt die wenigstens eine Tasche auf der oberen Stirnseite der Wasserstoffkathode, insbesondere des wenigstens einen Kathodenverbunds, eine Taschenöffnung.

Die Anode kann in weiteren Ausführungsformen die wenigstens eine Tasche mit Ausnahme der Taschenöffnung vollständig umgeben.

Der während des Zellenbetriebs entstehende und sich in der wenigstens einen Tasche sammelnde Wasserstoff wird in der Regel an einen geeigneten Verbraucher, vorzugsweise an eine Brennstoffzelle, insbesondere mobile Brennstoffzelle, abgeführt.

Zur Abführung des Wasserstoffs weist die Wasserstoffentwicklungszelle daher in zweckmäßigen Ausführungsformen taschenöffnungsseitig wenigstens eine Austrittsöffnung für das Gas auf. Die wenigstens eine Austrittsöffnung kann als einfache Durchbohrung eines Gehäusedeckels ausgebildet sein. Alternativ hierzu kann es sich bei der wenigstens einen Austrittsöffnung um das Ende einer aus der wenigstens einen Tasche (bzw. deren Öffnung) und zweckmäßigerweise aus einem Gehäusedeckel herausragenden Wasserstoffabführleitung, beispielsweise ausgebildet als Rohr oder Schlauch, handeln.

Zur Stabilisierung der wenigstens einen Wasserstoffkathode, insbesondere des wenigstens einen Kathodenverbunds, kann diese/dieser in weiteren Ausführungsformen in einer Stützstruktur, vorzugsweise einem Rahmen, beispielsweise Einschubrahmen, eingefasst sein.

Wie bereits erwähnt, ist das Gehäuse der Wasserstoffentwicklungszelle in der Regel zweiteilig ausgebildet und umfasst einen Gehäusedeckel und einen Gehäusebecher. Der Gehäusedeckel besitzt vorzugsweise Durchführungen für Elektrodenableiter bzw. Kontakte und für eine oder gegebenenfalls mehrere Austrittsöffnungen bzw. Abführleitungen für Wasserstoff. Deckel und Durchführungen sind zweckmäßiger Weise hermetisch verschlossen.

Besonders bevorzugt ist das Gehäuse der Wasserstoffentwicklungszelle ein zweiteilig ausgebildetes, nichtmetallisches Gehäuse, insbesondere ein zweiteilig ausgebildetes Kunststoffgehäuse, d.h. ein Gehäuse mit einem Gehäusedeckel und -becher jeweils aus Kunststoff.

Mit besonderem Vorteil ist die Wasserstoffentwicklungszelle frei von zwischen einem Gehäusedeckel und einem Gehäusebecher angeordneten, zur elektrischen Isolierung und/oder Abdichtung vorgesehene Kunststoffbauteilen, insbesondere in Form von Kunststoffringen (O-Ringen) oder dergleichen, welche bei gattungsgemäßen Zellen potentielle Undichtigkeitsstellen repräsentieren.

Das Gehäuse besitzt in einer weiteren Ausführungsform eine zylindrische, vorzugsweise prismatische, insbesondere quaderförmige, oder kreiszylindrische Form.

Im Falle einer quaderförmigen Ausbildung des Gehäuses kann dieses eine Höhe (Außenmaß/Innenmaß) von 167 mm bis 237 mm/155 mm, eine Breite von 80 mm bis 85 mm/75 mm bis 80 mm und eine Tiefe von 27 mm bis 46 mm/23 mm bis 40 mm aufweisen.

Bevorzugt definiert das Gehäuse ein Gehäusevolumen von 10 ml bis 1 I auf. Bei größeren Aufbauten können flachere Gehäusedesigns, beispielsweise mit einer Dicke < 50 mm, von Vorteil sein, da insbesondere die Entladung einer Zinkanode über längere Wege schwierig sein kann.

Zur Erzielung einer hermetischen Abdichtung des Gehäuses sind Gehäusedeckel und -becher üblicherweise miteinander versiegelt, insbesondere verklebt oder verschweißt. Insbesondere die Versiegelung von zweitteilig ausgebildeten Kunststoffgehäusen stellt dabei eine etablierte Technologie dar, so dass auch insoweit dem Auftreten von Undichtigkeiten wirkungsvoll entgegengetreten werden kann.

Bevorzugt handelt es sich bei dem Gehäuse um ein Kunststoffgehäuse, wie es typischerweise für Nickel-Cadmium-Akkumulatoren und Nickel-Zink-Akkumulatoren Verwendung findet.

Zum Beispiel kann das Gehäuse in weiterführenden Ausführungsformen einen Gehäusebecher aus Polystyrol und einen Gehäusedeckel aus einem Acrylnitril-Butadien-Styrol-Terpolymer umfassen. Alternativ kann der Gehäusebecher aus einem Polyamid bestehen, der beispielsweise mit einem als Gehäusedeckel dienenden Thermospiegel verschweißt ist.

Weitere Merkmale und Vorteile der vorliegenden Erfindung ergeben sich aus der nun folgenden Beschreibung bevorzugter Ausführungsformen des erfindungsgemäßen Gegenstandes in Verbindung mit den Unteransprüchen. Die dabei beschriebenen und dargestellten Merkmale können jeweils für sich oder zu mehreren in Kombination bei einer Ausführungsform der Erfindung verwirklicht sein. Die Ausführungsbeispiele dienen lediglich zur Erläuterung und zum besseren Verständnis und sind in keiner Weise einschränkend zu verstehen. Die Figuren werden durch ausdrückliche Bezugnahme zum Inhalt der Beschreibung gemacht.

### Figurenbeschreibung:

- Figur 1: zeigt schematisch einen Querschnitt einer Ausführungsform einer erfindungsgemäßen Wasserstoffentwicklungszelle.
- Figur 2a: zeigt schematisch die Draufsicht einer weiteren Ausführungsform einer erfindungsgemäßen Wasserstoffentwicklungszelle.
- Figur 2b: zeigt schematisch die Draufsicht einer weiteren Ausführungsform einer erfindungsgemäßen Wasserstoffentwicklungszelle.
- Figur 3: zeigt schematisch die Draufsicht einer weiteren Ausführungsform einer erfindungsgemäßen Wasserstoffentwicklungszelle.
- Figur 4: zeigt schematisch die Draufsicht einer weiteren Ausführungsform einer erfindungsgemäßen Wasserstoffentwicklungszelle.

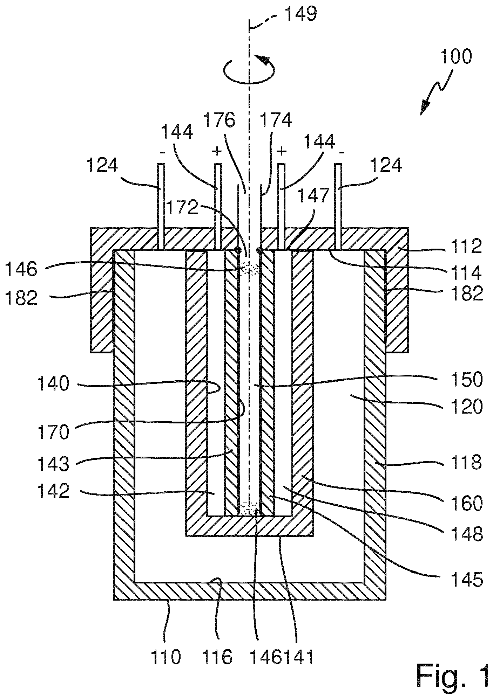

Die in Figur 1 dargestellte Wasserstoffentwicklungszelle 100 besitzt ein zweiteiliges, prismenförmig Gehäuse 110 mit einem Gehäusedeckel 112 und einem Gehäusebecher 118. Der Gehäusebecher 118 weist einen ebenen Bodenbereich 116 und der Gehäusedeckel 112 einen zum Bodenbereich 116 parallelen ebenen Deckelbereich 114 auf.

Die Zelle 100 weist eine Metallanode 120, bevorzugt aus einer Zinkpaste, einem wässrig-alkalischen Elektrolyten wie beispielsweise wässriger Kalilauge und einem Binder, auf.

Die Zelle 100 weist zudem eine Wasserstoffkathode 140 in Form eines einen Hohlkörper bildenden Kathodenverbunds auf.

Der Kathodenverbund 140 ist aus zwei folienförmigen Kathodenkörpern 142 und 148, bevorzugt in Form von Kathodenhalbteilen, gebildet. Bei den Kathodenkörpern 142 und 148 handelt es sich jeweils vorzugsweise um Gasdiffusionselektroden, insbesondere polymergebundene Gasdiffusionselektroden.

Auf die Kathodenkörper 142 und 148 sind einseitig jeweils mikroporöse und hydrophobe Folien 143 und 145, bevorzugt PTFE-Folien, auflaminiert.

Zur Ausbildung des Verbunds 140 sind die Kathodenkörper 142 und 148 auf ihren Folienseiten derart miteinander längsrandseitig, beispielsweise mittels eines Klebemittels 146, verbunden, dass die Folien 143 und 145 die Innenseite des Kathodenverbunds 140 auskleiden, d.h. dem Hohlraum 150, der durch den Kathodenverbund 140 definiert wird, unmittelbar zugewandt sind.

Die durch den Kathodenverbund 140 definierte Symmetrieachse 149 ist dabei orthogonal bzw. im Wesentlichen orthogonal zum Gehäusebodenbereich 116 angeordnet. Sowohl der Kathodenverbund 140 als auch die Anode 120 sind dabei im Gehäusebecher 118 angeordnet.

Der Kathodenverbund 140 ist auf seiner dem Hohlraum 150 abgewandten Seite über einen Separator 160 von der Metallanode 120 getrennt.

Obendrein erstreckt sich der Separator 160 vollständig entlang der unteren Stirnseite 141 des Kathodenverbunds 140.

Insgesamt bilden der Kathodenverbund 140 und der Separator 160 entlang der unteren Stirnseite 141 eine den Hohlraum 150 definierende Tasche (bzw. eine taschenförmige Struktur) 170, wobei der Verbund 140 die Taschenwand (bzw. den Mantel im Falle einer zylindrisch geformten Tasche) und der Separator 160 entlang der unteren Stirnseite 141 den Boden der Tasche 170 (Taschenboden) darstellen. Auf der oberen Stirnseite 147 des Kathodenverbunds 140 befindet sich die Öffnung 172 der Tasche 170.

Aus der Taschenöffnung 172 ragt eine Wasserstoffabführleitung 174, beispielsweise in Form eines Rohres oder Schlauches, mit einer Austrittsöffnung 176 für Wasserstoff heraus.

Fließt Strom durch die Wasserstoffentwicklungszelle 100, entsteht an dem Kathodenverbund 140 Wasserstoffgas, welches über die Folien 143 und 145 in den Hohlraum 150 gelangt.

Der Hohlraum 150 dient mit besonderem Vorteil als Sammelreservoir für den während des Zellenbetriebs entstehenden Wasserstoff. Gleichzeitig dient der Hohlraum 150 als Reservoir zur Abpufferung eines etwaigen, die Dichtigkeit der Zelle gefährdenden Wasserstoffüberdrucks. Über die Abführleitung 174 kann der entstehende Wasserstoff aus der Zelle 100 an einen Verbraucher wie beispielsweise eine portable Brennstoffzelle abgeführt werden.

Gehäusedeckel 112 und Gehäusebecher 118 bestehen jeweils aus Kunststoff. Bei dem Gehäuse 110 handelt es sich bevorzugt um ein Gehäuse, wie es typischerweise als Leergehäuse beispielsweise für Nickel-Cadmium-Akkumulatoren zum Einsatz kommt. Zur Erzielung einer hermetischen Abdichtung können Gehäusedeckel 112 und Gehäusebecher 118 zum Beispiel mittels eines Klebemittels 182 miteinander verklebt sein. Auf die Verwendung von elektrisch isolierenden und insbesondere abdichtenden Kunststoffbauteilen zwischen Gehäusedeckel 112 und Gehäusebecher 118 kann somit (anders als bei metallischen Gehäusen) verzichtet werden.

Der Gehäusedeckel 112 enthält Durchführungen (nicht dargestellt) für die Abführleitung 174 sowie für die Elektrodenableiter 124 (Anodenableiter) und 144 (Kathodenableiter).

Bezüglich weiterer Merkmale und Vorteile wird vollständig auf die bisherige Beschreibung Bezug genommen.

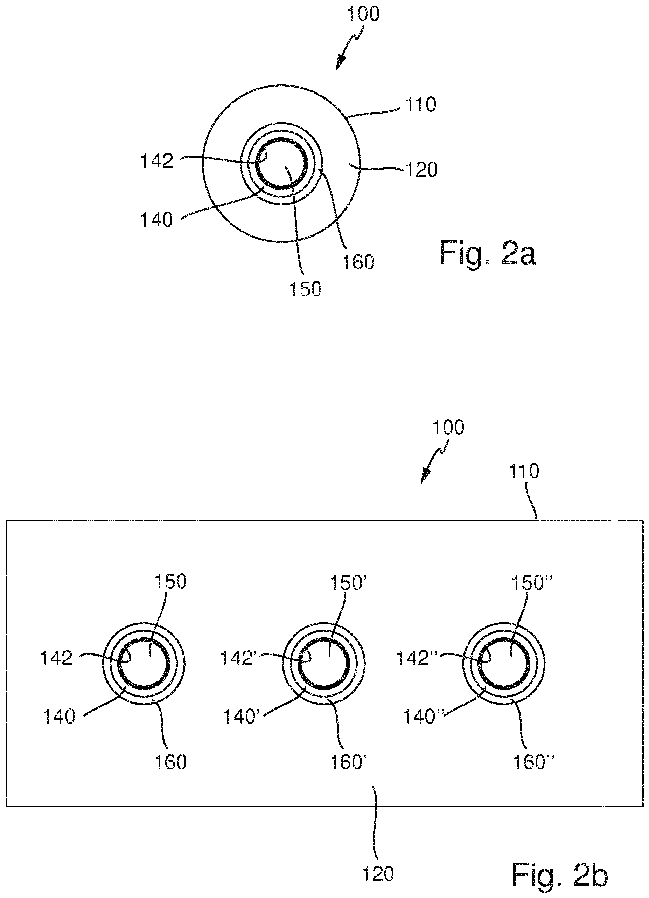

Die in Figur 2a dargestellte Wasserstoffentwicklungszelle 100 besitzt ein kreiszylindrisch ausgebildetes Gehäuse 110. In dem Gehäuse 110 ist zentral und koaxial eine Wasserstoffkathode 140 in Form eines einen Kreishohlzylinder bildenden Kathodenverbunds angeordnet. Die Innenseite des Kathodenverbunds 140 ist mit einer mikroporösen und hydrophoben Folie 142 wie beispielsweise einer PTFE-Folie bedeckt.

Der Verbund 140 ist über einen Separator 160 von der Anodemasse 120 getrennt. Der Separator 160 erstreckt sich zusätzlich über die gesamte untere Stirnseite des Verbunds 140 (nicht dargestellt), während die obere (dem Betrachter zugewandte) Stirnseite des Verbunds 140 offen, d.h. nicht bedeckt, ist.

Dadurch entsteht eine Tasche mit einem Hohlraum 150, der durch eine aus dem Kathodenverbund 140 gebildete Taschenwand und einem Taschenboden begrenzt wird, der aus dem sich über den unteren Stirnbereich des Verbunds 140 erstreckenden Separator gebildet ist. Entlang der oberen, offenen Stirnseite erstreckt sich die Öffnung der Tasche.

Bezüglich weiterer Merkmale und Vorteile wird ebenfalls auf die bisherige Beschreibung, insbesondere die Beschreibung zur Figur 1, Bezug genommen.

Bei der in Figur 2b dargestellten Wasserstoffentwicklungszelle 100 liegt die Wasserstoffkathode in Form von drei Kathodenverbünden 140; 140' und 140"- jeweils vom Typ wie in der Figur 2a beschrieben - vor.

Die Kathodenverbünde 140; 140' und 140" sind an ihren Außenseiten jeweils über einen Separator 160; 160' und 160" von der Anodenmasse 120 getrennt. Die Innenseiten der Kathodenverbünde 140; 140' und 140" sind jeweils mit einer mikroporösen und hydrophoben Folie 142; 142' und 142" wie beispielsweise einer PTFE-Folie ausgekleidet. Das Gehäuse 110 besitzt eine prismenförmige Ausgestaltung. Bezüglich weiterer Merkmale und Vorteile wird ebenso auf die bisherige Beschreibung, insbesondere die Beschreibung zur Figur 1, Bezug genommen.

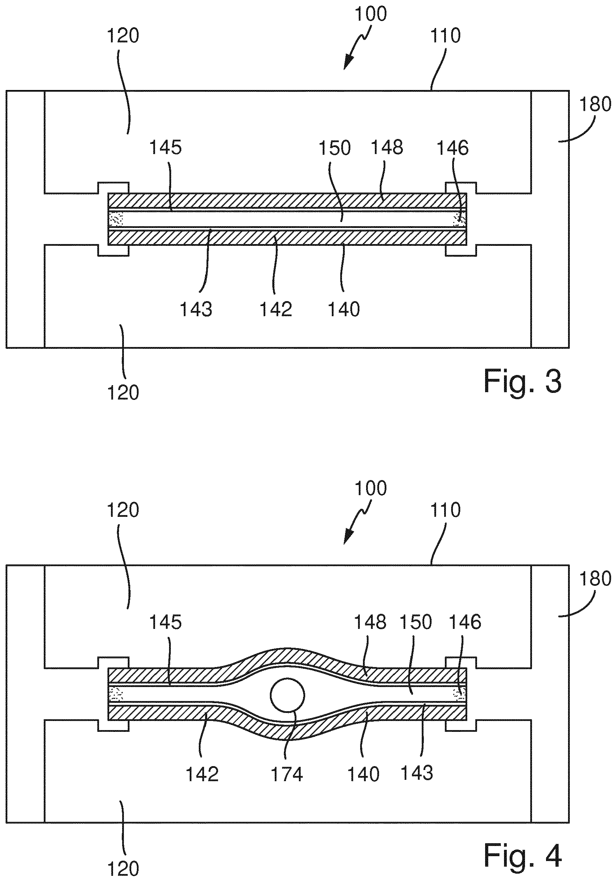

Figur 3 zeigt die Draufsicht einer weiteren Ausführungsform einer erfindungsgemäßen Wasserstoffentwicklungszelle 100. Die Zelle 100 besitzt ein prismatisches Gehäuse 110. In dem Gehäuse 110 bzw. einem Gehäusebecher davon befindet sich eine Wasserstoffkathode 140 in Form eines aus zwei Kathodenkörpern, vorzugsweise Kathodenhalbteilen, 142 und 148 gebildeten Kathodenverbunds. Der Verbund 140 definiert einen Hohlraum 150 und ist über einen Separator (nicht dargestellt) von der Anodenmasse 120 getrennt. Zur Stützung des Kathodenverbunds 140 und insbesondere zur Vermeidung, dass der Kathodenverbund 140 bei einem Wasserstoffüberdruck an den geklebten Stellen aufgeht, ist dieser in einen Einschubrahmen 180 eingefasst, wobei der Einschubrahmen 180 vorzugsweise eine Klammerfunktion auf den Kathodenverbund 140 ausübt. Bezüglich weiterer Merkmale und Vorteile wird auf die bisherige Beschreibung, insbesondere die Beschreibung zur Figur 1, Bezug genommen.

In Figur 4 ist eine weitere Ausführungsform einer erfindungsgemäßen Zelle 100 dargestellt. Diese unterscheidet sich gegenüber der in Figur 3 dargestellten Variante im Wesentlichen darin, dass die Wasserstoffkathode 140 in Form eines Kathodenverbunds vorliegt, dessen Hohlraum 150 im Bereich der Wasserstoffabführleitung 174 "linsenförmig" erweitert ist.

## Patentansprüche

1. Wasserstoffentwicklungszelle (100), die bei Durchfluss eines elektrischen Stroms eine zur Menge des durchfließenden Stroms proportionale Menge Wasserstoff freisetzt, umfassend eine elektrochemisch oxidierbare Anode (120), eine Wasserstoffkathode (140), einen Elektrolyten und ein diese umschließendes Gehäuse (110), wobei die Anode eine metallhaltige Anode ist und das Metall aus der Gruppe bestehend aus Zink, Magnesium, Aluminium und Legierungen davon ausgewählt ist, **dadurch gekennzeichnet, dass** die Wasserstoffkathode (140) am Aufbau wenigstens einer einen Hohlraum (150) definierenden oder bei Wasserstoffüberdruck einen Hohlraum (150) definierenden Tasche (170) beteiligt ist oder eine solche Tasche (170) bildet, wobei die Wasserstoffkathode (140) in Form wenigstens eines Hohlkörpers ausgebildet ist.

2. Wasserstoffentwicklungszelle (100) nach Anspruch 1, **dadurch gekennzeichnet, dass** die Wasserstoffkathode (140) in Form wenigstens eines einen Hohlkörper bildenden Kathodenverbunds ausgebildet ist.

3. Wasserstoffentwicklungszelle (100) nach Anspruch 2, **dadurch gekennzeichnet, dass** der wenigstens eine Kathodenverbund (140) aus wenigstens zwei Kathodenkörpern (142; 148) gebildet ist.

4. Wasserstoffentwicklungszelle (100) nach Anspruch 3, **dadurch gekennzeichnet, dass** die wenigstens zwei Kathodenkörper (142; 148) randseitig miteinander verbunden sind.

5. Wasserstoffentwicklungszelle (100) nach Anspruch 3 oder 4, **dadurch gekennzeichnet, dass** die wenigstens zwei Kathodenkörper (142; 148) jeweils einseitig mit einer mikroporösen und hydrophoben Folie (143; 145) beschichtet sind.

6. Wasserstoffentwicklungszelle (100) nach Anspruch 5, **dadurch gekennzeichnet, dass** die wenigstens zwei Kathodenkörper (142; 148) derart miteinander verbunden sind, dass die Folien (143; 145) die Innenseite eines durch den wenigstens einen Kathodenverbund (140) gebildeten Hohlkörpers auskleiden.

7. Wasserstoffentwicklungszelle (100) nach einem der vorhergehenden Ansprüche, **dadurch gekennzeichnet, dass** die Wasserstoffkathode (140) bzw. eine durch diese definierte Längssachse (149) orthogonal oder im Wesentlichen orthogonal zu einem ebenen Bodenbereich (116) des Gehäuses angeordnet ist.

8. Wasserstoffentwicklungszelle (100) nach einem der vorhergehenden Ansprüche, **dadurch gekennzeichnet, dass** die Wasserstoffkathode (140) eine den Taschenhohlraum (150) unmittelbar umgrenzende Taschenwand bildet.

9. Wasserstoffentwicklungszelle (100) nach einem der vorhergehenden Ansprüche, **dadurch gekennzeichnet, dass** die wenigstens eine Tasche entlang einer unteren Stirnseite (141) der Wasserstoffkathode (140) einen Taschenboden aus einem Separator-, Isolier- oder Dichtmaterial besitzt.

10. Wasserstoffentwicklungszelle (100) nach einem der vorhergehenden Ansprüche, **dadurch gekennzeichnet, dass** die wenigstens eine Tasche (170) taschenöffnungsseitig eine Austrittsöffnung (176) für Wasserstoff besitzt, welche aus der Taschenöffnung (172) herausragt.

11. Wasserstoffentwicklungszelle (100) nach einem der vorhergehenden Ansprüche, **dadurch gekennzeichnet, dass** das Gehäuse (110) ein zweiteilig ausgebildetes, nichtmetallisches Gehäuse ist.

12. Wasserstoffentwicklungszelle (100) nach einem der vorhergehenden Ansprüche, **dadurch gekennzeichnet, dass** die Zelle (100) frei von zwischen einem Gehäusedeckel (112) und einem Gehäusebecher (118) angeordneten, zur elektrischen Isolierung und/oder Abdichtung vorgesehenen Kunststoffbauteilen ist.

## Claims

1. Hydrogen development cell (100) which, by passage of an electrical current, releases an amount of hydrogen proportional to the amount of current flowing through, comprising an electrochemically oxidizable anode (120), a hydrogen cathode (140), an electrolyte and a casing (110) enclosing these, wherein the anode is a metal-containing anode and the metal is selected from the group consisting of zinc, magnesium, aluminium and alloys thereof, **characterized in that** the hydrogen cathode (140) is associated structure of at least one pocket (170) defining a cavity (150) or defining a cavity (150) in the presence of hydrogen overpressure or wherein the cathode (140) forms such a pocket (170), wherein the hydrogen cathode (140) is in the form of at least one hollow body.

2. Hydrogen development cell (100) according to Claim 1, **characterized in that** the hydrogen cathode (140) is constructed in the form of at least one cathode composite forming a hollow body.

3. Hydrogen development cell (100) according to Claim 2, **characterized in that** the at least one cathode composite (140) is formed from at least two cathode bodies (142; 148).

4. Hydrogen development cell (100) according to Claim 3, **characterized in that** the at least two cathode bodies (142; 148) are attached to each other at the edge.

5. Hydrogen development cell (100) according to Claim 3 or 4, **characterized in that** the at least two cathode bodies (142; 148) are each coated on one side with a microporous and hydrophobic film (143; 145).

6. Hydrogen development cell (100) according to Claim 5, **characterized in that** the at least two cathode bodies (142; 148) are attached to each other in such a manner that the films (143; 145) line the inner side of a hollow body formed by the at least one cathode composite (140).

7. Hydrogen development cell (100) according to any of the preceding claims, **characterized in that** the hydrogen cathode (140) or a longitudinal axis (149) defined by said hydrogen cathode is arranged orthogonally or essentially orthogonally to a level base area (116) of the casing.

8. Hydrogen development cell (100) according to any of the preceding claims, **characterized in that** the hydrogen cathode (140) forms a pocket wall directly surrounding the pocket cavity (150).

9. Hydrogen development cell (100) according to any of the preceding claims, **characterized in that** the at least one pocket, along a lower face (141) of the hydrogen cathode (140), has a pocket base composed of a separator material, insulating material or sealing material.

10. Hydrogen development cell (100) according to any of the preceding claims, **characterized in that** the at least one pocket (170) has an outlet vent (176) for hydrogen on the open side of the pocket which protrudes from the pocket opening (172).

11. Hydrogen development cell (100) according to any of the preceding claims, **characterized in that** the casing (110) is a non-metallic casing constructed in two parts.

12. Hydrogen development cell (100) according to any of the preceding claims, **characterized in that** the cell (100) is free of plastic components, arranged between a casing cover (112) and a casing cup (118), provided for electrical insulation and/or sealing.

## Revendications

1. Cellule de développement d'hydrogène (100), qui libère lors du passage d'un courant électrique une quantité d'hydrogène proportionnelle à la quantité de courant passant, comprenant une anode oxydable électrochimiquement (120), une cathode à hydrogène (140), un électrolyte et un boîtier (110) l'entourant, l'anode étant une anode contenant un métal et le métal étant choisi dans le groupe constitué par le zinc, le magnésium, l'aluminium et leurs alliages, **caractérisée en ce que**, dans la structure, la cathode à hydrogène (140) fait partie d'au moins une poche (170) définissant une cavité (150) ou définissant une cavité (150) à une surpression d'hydrogène, ou forme une telle poche (170), la cathode à hydrogène (140) étant configurée sous la forme d'au moins un corps creux.

2. Cellule de développement d'hydrogène (100) selon la revendication 1, **caractérisée en ce que** la cathode à hydrogène (140) est configurée sous la forme d'au moins un composite cathodique formant un corps creux.

3. Cellule de développement d'hydrogène (100) selon la revendication 2, **caractérisée en ce que** l'au moins un composite cathodique (140) est formé par au moins deux corps cathodiques (142 ; 148).

4. Cellule de développement d'hydrogène (100) selon la revendication 3, **caractérisée en ce que** les au moins deux corps cathodiques (142 ; 148) sont reliés les uns avec les autres sur la périphérie.

5. Cellule de développement d'hydrogène (100) selon la revendication 3 ou 4, **caractérisée en ce que** les au moins deux corps cathodiques (142 ; 148) sont chacun revêtus d'un côté avec un film microporeux et hydrophobe (143 ; 145).

6. Cellule de développement d'hydrogène (100) selon la revendication 5, **caractérisée en ce que** les au moins deux corps cathodiques (142 ; 148) sont reliés les uns aux autres de sorte que les films (143 ; 145) revêtent le côté intérieur d'un corps creux formé par l'au moins un composite cathodique (140).

7. Cellule de développement d'hydrogène (100) selon l'une quelconque des revendications précédentes, **caractérisée en ce que** la cathode à hydrogène (140) ou un axe longitudinal (149) défini par celle-ci est agencé orthogonalement ou essentiellement orthogonalement à une zone de fond plane (116) du boîtier.

8. Cellule de développement d'hydrogène (100) selon l'une quelconque des revendications précédentes, **caractérisée en ce que** la cathode à hydrogène (140) forme une paroi de poche délimitant directement la cavité de la poche (150).

9. Cellule de développement d'hydrogène (100) selon l'une quelconque des revendications précédentes, **caractérisée en ce que** l'au moins une poche comporte le long d'un côté frontal inférieur (141) de la cathode à hydrogène (140) un fond de poche en un matériau de séparation, d'isolation ou d'étanchéité.

10. Cellule de développement d'hydrogène (100) selon l'une quelconque des revendications précédentes, **caractérisée en ce que** l'au moins une poche (170) comporte du côté de l'ouverture de la poche une ouverture de sortie (176) pour l'hydrogène, qui dépasse de l'ouverture de la poche (172).

11. Cellule de développement d'hydrogène (100) selon l'une quelconque des revendications précédentes, **caractérisée en ce que** le boîtier (110) est un boîtier non métallique formé en deux parties.

12. Cellule de développement d'hydrogène (100) selon l'une quelconque des revendications précédentes, **caractérisée en ce que** la cellule (100) est exempte de composants en plastique agencés entre un couvercle du boîtier (112) et un bécher du boîtier (118), prévus pour l'isolement électrique et/ou l'étanchéification.
